# EUROPÄISCHE PATENTSCHRIFT

(11) **EP 2 685 582 B1**
(45) Veröffentlichungstag und Bekanntmachung des Hinweises auf die Patenterteilung: **29.11.2017**
(21) Anmeldenummer: 13169162.8
(22) Anmeldetag: 24.05.2013
(51) Int. Cl.: H02J 3/38, H02J 3/32, G05F 1/67

(54) **Stromrichtermodul, Photovoltaikanlage mit Stromrichtermodul und Verfahren zum Betreiben einer Photovoltaikanlage**
Converter module, photovoltaic assembly with converter module and method for operating a photovoltaic assembly
Module de convertisseur de puissance, installation photovoltaïque dotée d'un module de convertisseur de puissance et procédé de fonctionnement d'une installation photovoltaïque

(30) Priorität: 13.07.2012 DE 102012212287
(43) Veröffentlichungstag der Anmeldung: 15.01.2014
(73) Patentinhaber: SMA Solar Technology AG, 34266 Niestetal (DE)
(72) Erfinder: Belschner, Werner, 74544 Michelbach An Der Bilz (DE); Pohlemann, Rene, 99195 Eckstedt (DE); Sauer, Thomas, 76137 Karlsruhe (DE)
(74) Vertreter: Lahnor, Peter

(56) Entgegenhaltungen:
- EP-A2- 2 339 714
- JP-A- 2002 354 677
- US-A1- 2011 273 130
- ZHAN WANG ET AL: "Integrated MPPT and bidirectional battery charger for PV application using one multiphase interleaved three-port dc-dc converter", APPLIED POWER ELECTRONICS CONFERENCE AND EXPOSITION (APEC), 2011 TWENTY-SIXTH ANNUAL IEEE, IEEE, 6. März 2011 (2011-03-06), Seiten 295-300, XP032013896, DOI: 10.1109/APEC.2011.5744611 ISBN: 978-1-4244-8084-5

## Beschreibung

Die Erfindung betrifft ein Stromrichtermodul, eine Photovoltaikanlage mit Stromrichtermodul und ein Verfahren zum Betreiben einer Photovoltaikanlage.

### Stand der Technik

Photovoltaikanlagen oder sonstige Anlagen mit Gleichstromquellen wie beispielsweise Brennstoffzellen, galvanischen Zellen oder Gleichstromgeneratoren verfügen meist über Stromrichter, welche die durch die Gleichstromquelle, beispielsweise ein Photovoltaikmodul mit einer oder mehreren Solarzellen, bereitgestellte Gleichspannung in die erforderlichen Gleichspannungslagen und/oder Wechselspannungslagen umrichten.

Üblicherweise wird ein Photovoltaikmodul oder mehrere Photovoltaikmodule über einen Eingangsgleichspannungswandler, beispielsweise einen Hoch-/Tiefsetzsteller, an einen Zwischenkreis gekoppelt. Aus dem Zwischenkreis kann dann über einen weiteren Gleichspannungswandler Leistung in einen Batteriespeicher eingespeist werden. Zudem kann ein gegebenenfalls galvanisch getrennter Wechselrichter an den Zwischenkreis gekoppelt werden, welcher Leistung zur Einspeisung in ein Wechselstromnetz aus dem Zwischenkreis entnimmt.

Bekannt ist zudem, den Eingangsgleichspannungswandler im Arbeitspunkt maximaler Leistungsaufnahme aus dem Photovoltaikmodul zu betreiben, indem eine maximale Leistungspunktregelung ("maximum power point tracking", MPPT) in einer MPP-Steuereinheit implementiert wird. Die MPP-Steuereinheit steuert dabei Halbleiterbauelemente in dem Eingangsgleichspannungswandler derart an, dass die dem Photovoltaikmodul entnommene Leistung maximal ist, da der optimale Arbeitspunkt des Photovoltaikmoduls schwanken kann, beispielsweise aufgrund von wechselnder Sonneneinstrahlung oder Abschattung von einzelnen Solarzellen.

Die Druckschrift DE 21 2008 000 035 U1 offenbart einen Wechselrichter mit einem eingangsseitigen leistungsgeregelten Gleichspannungswandler, einem ausgangsseitigen Gleichspannungswandler und einem ausgangsseitigen Wechselrichter. Die Druckschrift US 2004/0125618 A1 offenbart ein modulares Wechselrichtersystem mit einer Vielzahl von Gleichspannungswandlern, die einen Zwischenkreis speisen, sowie einem Wechselrichter, welcher aus dem Zwischenkreis gespeist wird.

Die Druckschrift US 2011/0273130 A1 offenbart eine Vorrichtung und ein Verfahren zum Laden bzw. Entladen einer Batterie. Die Batterie kann über ein Photovoltaikmodul geladen werden bzw. über einen Wechselspannungs-Verbraucher i entladen werden. Zur Anpassung der Spannungsniveaus verfügt die Vorrichtung über zwei Gleichspannungswandler. Ein erster Gleichspannungswandler ist dabei an das Photovoltaikmodul angeschlossen, und ein zweiter Gleichspannungswandler ist mit der Batterie verbunden. Ferner verfügt die Vorrichtung über einen Wechselrichter, der die Gleichspannung von der Batterie in eine Wechselspannung für den Verbraucher konvertiert.

Die Druckschrift ZHAN WANG ET AL: "Integrated MPPT and bidirectional battery charger for PV application using one multiphase interleaved three-port dc-dc converter", APPLIED POWER ELECTRONICS CONFERENCE AND EXPOSITION (APEC), 2011 TWENTY-SIXTH ANNUAL IEEE, 6. März 2011, ISBN: 978-1-4244-8084-5 offenbart auf den Seiten 295-300 einen bidirektionalen dreiphasigen Gleichspannungswandler. Eine Gleichspannung von einer Batterie, sowie eine Gleichspannung von einem Photovoltaikmodul wird dabei durch den Gleichspannungswandler angepasst und anschließend einem Wechselrichter zugeführt.

Es besteht ein Bedarf an Lösungen für aus Gleichstromquellen gespeisten Stromrichtern, bei denen die Topologie des Stromrichters vereinfacht, die Effizienz gesteigert und die Verlustleistung minimiert werden kann. Offenbarung der Erfindung

Die vorliegende Erfindung schafft gemäß einem Aspekt ein Stromrichtermodul mit den Merkmalen des unabhängigen Anspruchs 1.

Gemäß einem weiteren Aspekt schafft die vorliegende Erfindung eine Photovoltaikanlage mit einem oder mehreren Photovoltaikmodulen mit mindestens einer Solarzelle, einem erfindungsgemäßen Stromrichtermodul, dessen Gleichspannungseingangsanschluss mit einem Ausgangsanschluss des Photovoltaikmoduls gekoppelt ist, und einem elektrischen Energiespeichermodul, welches mit dem Gleichspannungsausganganschluss des Stromrichtermoduls gekoppelt ist.

Gemäß einem weiteren Aspekt schafft die vorliegende Erfindung ein Verfahren zum Betreiben einer Photovoltaikanlage, insbesondere einer Photovoltaikanlage mit den Merkmalen des unabhängigen Patentanspruchs 6.

### Vorteile der Erfindung

Eine Idee der vorliegenden Erfindung ist es, den Eingangsgleichspannungswandler des Stromrichters, welcher die Gleichstromquelle mit dem Zwischenkreis des Stromrichters koppelt, entfallen zu lassen, und die Gleichstromquelle direkt an den Zwischenkreis des Stromrichters anzuschließen. Demzufolge kann eine maximale Leistungspunktregelung ("maximum power point tracking", MPPT) für einen aus dem Zwischenkreis gespeisten Wechselrichter und/oder einen aus dem Zwischenkreis gespeisten Gleichspannungswandler implementiert werden, um die Leistungsentnahme aus der Gleichstromquelle zu optimieren.

Ein Vorteil der Erfindung ist es, dass der Stromrichter damit erheblich vereinfacht werden kann. Das Vorsehen eines Eingangsgleichspannungswandlers entfällt, so dass die Kosten für die Fertigung des Stromrichters reduziert werden. Zudem wird die Effizienz des Stromrichters gesteigert, da die in einem Eingangsgleichspannungswandler üblicherweise anfallenden Leistungsverluste entfallen.

Besonders vorteilhaft ist es, dass der Zwischenkreis durch die vereinfachte Topologie des Stromrichters ebenfalls vereinfacht werden kann, wenn das MPPT mit entsprechender Regeldynamik ausgestattet wird. Dadurch können einfachere und günstigere Folienkondensatoren mit längerer Lebensdauer als Zwischenkreiskondensator eingesetzt werden.

Außerdem ist es von Vorteil, dass sowohl eine einphasige als auch eine mehrphasige, beispielsweise dreiphasige Topologie in dem Stromrichter realisiert werden kann, das heißt, der Wechselrichter kann je nach Bedarf sowohl als einphasige als auch als mehrphasige Wechselspannungsquelle dienen.

Gemäß einer Ausführungsform der erfindungsgemäßen Photovoltaikanlage kann die Photovoltaikanlage mindestens einen Wechselstromverbraucher umfassen, welcher mit dem Wechselspannungsausgangsanschluss des Stromrichtermoduls gekoppelt ist. Beispielsweise kann das Stromrichtermodul auch ein Wechselstromnetz speisen. Dies ermöglicht es in vorteilhafter Weise, die Photovoltaikanlage im Netzparallelbetrieb zu betreiben.

Gemäß einer weiteren Ausführungsform der erfindungsgemäßen Photovoltaikanlage kann das Photovoltaikmodul dazu ausgelegt sein, einen dreiphasigen Strom in das Stromrichtermodul einzuspeisen. Alternativ oder zusätzlich dazu kann das Stromrichtermodul dazu ausgelegt sein, einen dreiphasigen Strom an dem Wechselspannungsausgangsanschluss des Stromrichtermoduls bereitzustellen.

Gemäß einer weiteren Ausführungsform des erfindungsgemäßen Verfahrens kann das MPPT ein Regeln der Eingangsspannung des Wechselrichters und ein Festlegen der Leistungsaufnahme des Gleichspannungswandlers in Abhängigkeit von der geregelten Eingangsspannung des Wechselrichters aufweisen. Durch dieses modulare Regelkonzept kann die Leistungsaufnahme sowohl des Wechselrichters als auch des Gleichspannungswandlers flexibel und bedarfsgerecht aufeinander abgestimmt werden.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Systems mit einer Gleichstromquelle, einem Wechselstromnetz, Wechselstromverbrauchern und einem elektrischen Energiespeicher gemäß einer Ausführungsform der vorliegenden Erfindung;
- Fig. 2: eine schematische Darstellung eines Stromrichtermoduls gemäß einer weiteren Ausführungsform der vorliegenden Erfindung;
- Fig. 3: eine schematische Darstellung eines weiteren Stromrichtermoduls gemäß einer weiteren Ausführungsform der vorliegenden Erfindung;
- Fig. 4: eine schematische Darstellung eines weiteren Stromrichtermoduls gemäß einer weiteren Ausführungsform der vorliegenden Erfindung; und
- Fig. 5: eine schematische Darstellung eines Verfahrens zum Betreiben einer Photovoltaikanlage gemäß einer weiteren Ausführungsform der vorliegenden Erfindung.

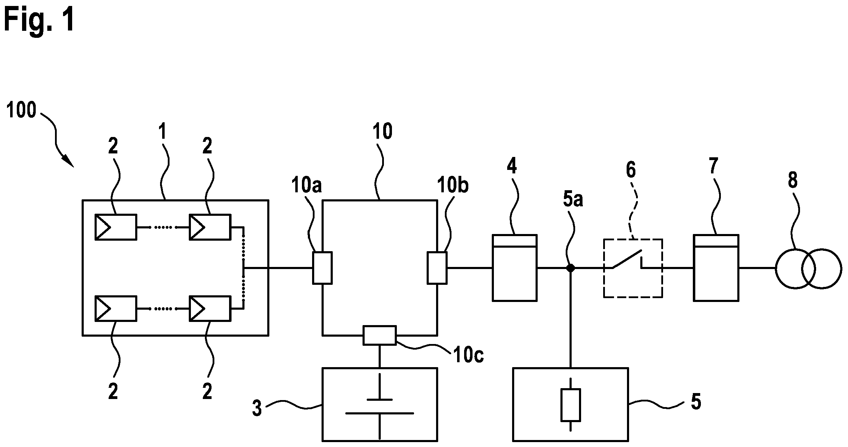

Fig. 1 zeigt eine schematische Darstellung eines Systems 100, beispielsweise einer Photovoltaikanlage im Netzparallelbetrieb. Das System 100 weist eine Gleichstromquelle 1, beispielsweise ein Photovoltaikmodul mit einer oder mehreren Solarzellen 2 auf. Die Anzahl der Photovoltaikmodule und der Solarzellen 2 ist dabei prinzipiell nicht begrenzt. Weiterhin können die Photovoltaikmodule und/oder Solarzellen in Parallel- und/oder Reihenschaltung verschaltet sein. Die Gleichstromquelle 1 kann alternativ auch eine Brennstoffzelle, eine galvanische Zelle oder einen Gleichstromgenerator aufweisen.

Die Gleichstromquelle 1 speist ein Stromrichtermodul 10 über einen Gleichspannungseingangsanschluss 10a. Das Stromrichtermodul 10 verfügt neben dem Gleichspannungseingangsanschluss 10a über einen Gleichspannungsausgangsanschluss 10c, welcher dazu ausgelegt ist, eine Ausgangsgleichspannung bereitzustellen und einen Wechselspannungsausgangsanschluss 10b, welcher dazu ausgelegt ist, eine Ausgangswechselspannung bereitzustellen. Der Gleichspannungsausgangsanschluss 10c ist mit einem elektrischen Energiespeichermodul 3 gekoppelt, beispielsweise mit einem Akkumulator oder einem sonstigen Energiespeichersystem.

Der Wechselspannungsausgangsanschluss 10b des Stromrichters 10 ist mit einem Ausgangsknoten 5a gekoppelt, an dem einerseits ein oder mehrere Wechselstromverbraucher 5 angeschlossen sein können. Andererseits kann an dem Ausgangsknoten 5a ein Wechselstromnetz 8 über ein Trennschütz 6 angeschlossen werden. Das System 100 kann damit im Netzparallelbetrieb betrieben werden, das heißt, je nach Bedarf kann das Energiespeichermodul 3 sowie die Wechselstromverbraucher 5 mit Leistung aus der Gleichstromquelle 1 gespeist werden. Die übrige Leistung kann über das Trennschütz 6 in das Wechselstromnetz 8 eingespeist werden. Hierzu können Stromzähler an entsprechenden Stellen eingesetzt werden, beispielsweise ein Ertragszähler 4, welcher den gesamten Ertrag der Gleichstromquelle 1 ermittelt, und/oder ein Einspeisezähler 7, welcher die in das Wechselstromnetz 8 eingespeiste Energie erfasst. Das System 100 kann beispielsweise in einem Wohnhaus mit Haushaltsverbrauchern 5 und auf einem Hausdach installiertem Photovoltaikmodul 1 implementiert werden.

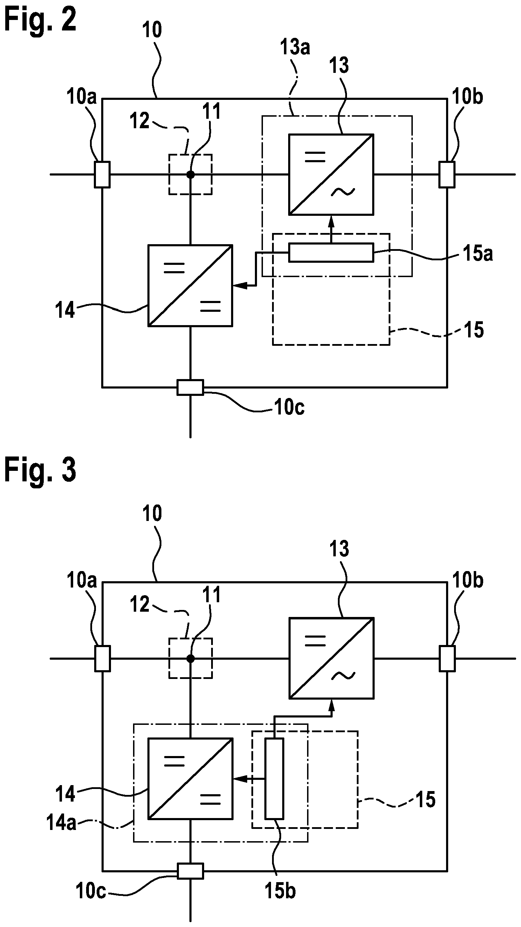

Fig. 2 zeigt eine schematische Darstellung eines Stromrichtermoduls, insbesondere eines Stromrichtermoduls 10, welches in dem in Fig. 1 gezeigten System 100 eingesetzt werden kann. Das Stromrichtermodul 10 weist einen Gleichspannungseingangsanschluss 10a auf, welcher dazu ausgelegt ist, eine Eingangsspannung einer Gleichstromquelle 1 zu empfangen, beispielsweise eines Photovoltaikmoduls 1. Das Stromrichtermodul 10 weist einem Zwischenkreis 12 mit einem Zwischenkreisknoten 11 auf, welcher direkt mit dem Gleichspannungseingangsanschluss 10a gekoppelt ist, das heißt, der Zwischenkreis 12 wird ohne Zwischenschaltung eines aktiven spannungswandelnden Elements durch die Gleichstromquelle 1 gespeist. Gegebenenfalls kann zwischen den Zwischenkreis 12 und den Gleichspannungseingangsanschluss 10a noch eine Schutzschaltung für die Gleichstromquelle 1, ein Trennschütz oder ein Filter zur Verbesserung der elektromagnetischen Verträglichkeit gekoppelt werden. Der Zwischenkreis 12 kann beispielsweise einen Zwischenkreiskondensator umfassen.

Das Stromrichtermodul 10 weist weiterhin einen Gleichspannungsausgangsanschluss 10c, welcher dazu ausgelegt ist, eine Ausgangsgleichspannung bereitzustellen, sowie eine Wechselspannungsausgangsanschluss 10b, welcher dazu ausgelegt ist, eine Ausgangswechselspannung bereitzustellen, auf. Zwischen den Zwischenkreis 12 und den Gleichspannungsausgangsanschluss 10c ist zur Entnahme einer Eingangsspannung aus dem Zwischenkreis 12 ein Gleichspannungswandler 14 gekoppelt. Zwischen den Zwischenkreis 12 und den Wechselspannungsausgangsanschluss 10b ist zur Entnahme einer Eingangsspannung aus dem Zwischenkreis 12 ein Wechselrichter 13 gekoppelt. Der Gleichspannungswandler 14 kann beispielsweise ein galvanisch getrennter Gleichspannungswandler, wie zum Beispiel ein Gegentaktflusswandler oder ein Sperrwandler sein. Alternativ kann der Gleichspannungswandler 14 auch ohne galvanische Trennung ausgestaltet sein, beispielsweise als Synchronwandler oder Aufwärts-/Abwärtswandler bzw. Inverswandler. Der Wechselrichter 13 kann ebenfalls mit oder ohne galvanischer Trennung ausgestaltet werden. Beispielsweise kann der Wechselrichter 13 ein selbstgeführter oder fremdgeführter einphasiger oder mehrphasiger Wechselrichter sein.

Das Stromrichtermodul 10. weist zudem eine Regeleinrichtung 15 auf, welche mit dem Gleichspannungswandler 14 und dem Wechselrichter 13 gekoppelt ist. Die Regeleinrichtung 15 ist dazu ausgelegt ist, die Eingangsspannung des Wechselrichters 13 und des Gleichspannungswandlers 14 auf eine maximale Leistungsentnahme aus der Gleichstromquelle 1 zu regeln. Insbesondere kann die Regeleinrichtung 15 ein Maximum Power Point Tracking (MPPT) durchführen. Hierzu regelt die Regeleinrichtung 15 die Eingangsspannung des Wechselrichters 13 und/oder des Gleichspannungswandlers 14 auf den benötigten Wert. Dazu variiert die Regeleinrichtung 15 die Spannung um einen kleinen Betrag. Vergrößert sich dabei das Produkt aus Strom und Spannung, das heißt die Leistung der Gleichstromquelle 1, wird die neue Spannung beibehalten, andernfalls wird die Spannung wieder auf den ursprünglichen Wert zurückgesetzt. Dieses iterative Verfahren führt die Regeleinrichtung 15 ständig aus. Insbesondere bei Photovoltaikmodulen mit zeitlich schwankendem Ertrag aufgrund von wechselnden Bestrahlungsverhältnissen kann somit immer ein Betrieb im maximalen Leistungspunkt gewährleistet werden.

In der beispielhaften Ausführungsform der Fig. 2 weist die Regeleinrichtung 15 einen ersten, dem Wechselrichter 13 zugeordneten und die Eingangsspannung des Wechselrichters 13 regelnden MPP-Regler 15a auf. Der erste MPP-Regler 15a führt damit ein MPPT für den Wechselrichter 13 aus. Abhängig von der eingeregelten Eingangsspannung des Wechselrichters 13 kann der erste MPP-Regler 15a den Gleichspannungswandler 14 zum Einstellen der Eingangsspannung ansteuern, um die Leistungsentnahme des Wechselrichters 13 und des Gleichspannungswandlers 14 aus der Gleichstromquelle 1 aufeinander abzustimmen. Der erste MPP-Regler 15a kann beispielsweise in einem Mikroprozessor einer den Wechselrichter 13 umfassenden ersten Leistungskomponente 13a implementiert werden.

Fig. 3 zeigt eine schematische Darstellung eines weiteren Stromrichtermoduls, insbesondere eines weiteren Stromrichtermoduls 10, welches in dem in Fig. 1 gezeigten System 100 eingesetzt werden kann. Das Stromrichtermodul 10 in Fig. 3 unterscheidet sich von dem in Fig. 2 gezeigten Stromrichtermodul im Wesentlichen darin, dass die Regeleinrichtung 15 statt des ersten MPP-Reglers 15a einen zweiten, dem Gleichspannungswandler 14 zugeordneten und die Eingangsspannung des Gleichspannungswandlers 14 regelnden MPP-Regler 15b aufweist. Der zweite MPP-Regler 15b implementiert dabei ähnlich dem ersten MPP-Regler 15a ein MPPT für den Gleichspannungswandler 14 und kann beispielsweise in einem Mikroprozessor einer den Gleichspannungswandler 14 umfassenden zweiten Leistungskomponente 14a implementiert werden. Der zweite MPP-Regler 15a kann abhängig von der eingeregelten Eingangsspannung des Gleichspannungswandlers 14 den Wechselrichter 13 zum Einstellen der Eingangsspannung ansteuern, um die Leistungsentnahme des Wechselrichters 13 und des Gleichspannungswandlers 14 aus der Gleichstromquelle 1 aufeinander abzustimmen.

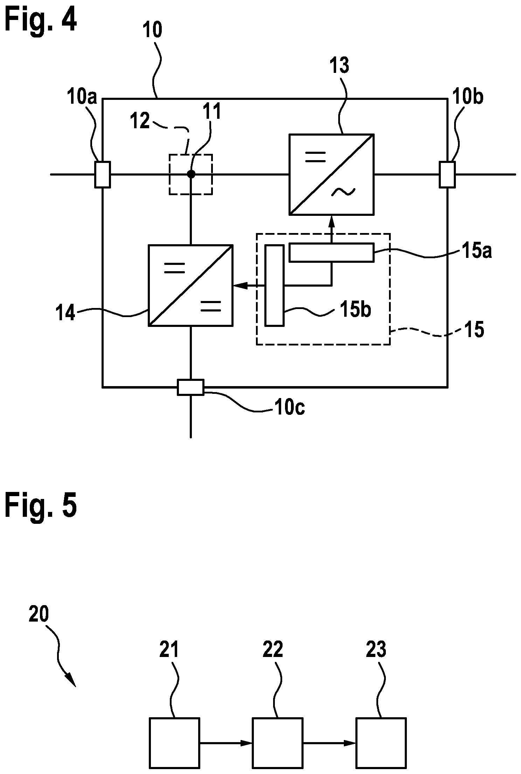

Fig. 4 zeigt eine schematische Darstellung eines weiteren Stromrichtermoduls, insbesondere eines weiteren Stromrichtermoduls 10, welches in dem in Fig. 1 gezeigten System 100 eingesetzt werden kann. In dem in Fig. 4 gezeigten Stromrichtermodul 10 umfasst die Regeleinrichtung 15 sowohl den ersten MPP-Regler 15a als auch den zweiten MPP-Regler 15b als verteiltes Regelsystem. Beispielsweise kann der erste MPP-Regler 15a ein schnelles unterlagertes MPPT implementieren, während der zweite MPP-Regler 15b ein langsames überlagertes MPPT implementiert. Je nach Regeldynamik der MPP-Regler 15a und 15b kann die MPP-Regelung so schnell implementiert werden, dass die Kapazität des elektrischen Energiespeichermoduls 3 als Pufferkapazität genutzt werden kann. Dadurch können die Spannungsanforderungen an den Zwischenkreis 12 reduziert werden, was eine einfache und günstige Implementierung eines Zwischenkreiskondensators, beispielsweise über einen Folienkondensator mit langer Lebensdauer ermöglicht.

Fig. 5 zeigt eine schematische Darstellung eines beispielhaften Verfahrens 20 zum Betreiben einer Photovoltaikanlage, insbesondere in einem Netzparallelbetrieb. Das Verfahren 20 kann beispielsweise unter Zuhilfenahme der in den Fig. 2 bis 4 beispielhaft gezeigten Stromrichtermodule 10 in dem in Fig. 1 gezeigten System 100 implementiert werden.

In einem ersten Schritt 21 erfolgt ein direktes Einspeisen eines Gleichstroms aus einem Photovoltaikmodul 1 in den Zwischenkreis 12 eines Stromrichtermoduls 10, das heißt ein Einspeisen ohne Spannungswandlung. In einem zweiten Schritt 22 erfolgt ein Einspeisen der Gleichspannung des Zwischenkreises 12 in einen mit dem Zwischenkreis 12 gekoppelten Wechselrichter 13 des Stromrichtermoduls 10 und einen mit dem Zwischenkreis 12 gekoppelten Gleichspannungswandler 14. In einem dritten Schritt 23 erfolgt ein Regeln der Eingangsspannung des Wechselrichters 13 und des Gleichspannungswandlers 14 auf eine maximale Leistungsentnahme aus dem Photovoltaikmodul 1, insbesondere über ein Maximum Power Point Tracking (MPPT), wie im Zusammenhang mit Fig. 2 erläutert.

Das MPPT kann beispielsweise durch ein Regeln der Eingangsspannung des Wechselrichters 13 und ein Festlegen der Leistungsaufnahme des Gleichspannungswandlers 14 in Abhängigkeit von der geregelten Eingangsspannung des Wechselrichters 13 erfolgen. Alternativ kann auch ein Regeln der Eingangsspannung des Gleichspannungswandlers 14 und ein Festlegen der Leistungsaufnahme des Wechselrichters 13 in Abhängigkeit von der geregelten Eingangsspannung des Gleichspannungswandlers 14 erfolgen. Optional kann auch ein verteiltes Regeln erfolgen, das heißt ein korreliertes Regeln sowohl der Eingangsspannung des Gleichspannungswandlers 14 als auch der Eingangsspannung des Wechselrichters 13, so dass die Leistungsaufnahme aus dem Photovoltaikmodul 1 optimiert wird.

Die Regeldynamik des MPPT des Gleichspannungswandlers 14 kann beispielsweise größer als die Regeldynamik des MPPT des Wechselrichters 13 sein, beispielsweise indem zum Regeln der Eingangsspannung des Gleichspannungswandlers 14 ein schneller überlagerter MPP-Regler, und zum Regeln der Eingangsspannung des Wechselrichters 13 ein langsamer unterlagerter MPP-Regler herangezogen wird.

## Patentansprüche

1. Stromrichtermodul (10), mit:
einem Gleichspannungseingangsanschluss (10a), welcher dazu ausgelegt ist, eine Eingangsspannung einer Gleichstromquelle (1) zu empfangen;
einem Zwischenkreis (12), welcher mit dem Gleichspannungseingangsanschluss (10a) gekoppelt ist;
einem Gleichspannungsausgangsanschluss (10c), welcher dazu ausgelegt ist, eine Ausgangsgleichspannung bereitzustellen;
einem Wechselspannungsausgangsanschluss (10b), welcher dazu ausgelegt ist, eine Ausgangswechselspannung bereitzustellen;
einem Gleichspannungswandler (14), welcher zwischen den Zwischenkreis (12) und den Gleichspannungsausgangsanschluss (10c) zur Entnahme einer Eingangsspannung aus dem Zwischenkreis (12) gekoppelt ist;
einem Wechselrichter (13), welcher zwischen den Zwischenkreis (12) und den Wechselspannungsausgangsanschluss (10b) zur Entnahme einer Eingangsspannung aus dem Zwischenkreis (12) gekoppelt ist; und
einer Regeleinrichtung (15), welche mit dem Gleichspannungswandler (14) und dem Wechselrichter (13) gekoppelt ist, und welche dazu ausgelegt ist, die Eingangsspannung des Wechselrichters (13) und des Gleichspannungswandlers (14) auf eine maximale Leistungsentnahme aus der Gleichstromquelle (1) zu regeln **dadurch gekennzeichnet, dass**
der Zwischenkreis (12) direkt mit dem Gleichspannungseingangsanschluss (10a) gekoppelt ist;
die Regeleinrichtung (15) einen ersten, dem Wechselrichter (13) zugeordneten und die Eingangsspannung des Wechselrichters (13) regelnden MPP-Regler (15a) aufweist;
die Regeleinrichtung (15) einen zweiten, dem Gleichspannungswandler (14) zugeordneten und die Eingangsspannung des Gleichspannungswandlers (14) regelnden Maximum Power Point, MPP, Regler (15b) aufweist; und
die Regeldynamik des zweiten MPP-Reglers (15b) größer als die Regeldynamik des ersten MPP-Reglers (15a) ist.

2. Photovoltaikanlage (100), mit:
einem oder mehreren Photovoltaikmodulen (1) mit mindestens einer Solarzelle (2); einem Stromrichtermodul (10) nach Anspruch 1, dessen
Gleichspannungseingangsanschluss (10a) mit einem Ausgangsanschluss der Photovoltaikmodule (1) gekoppelt ist; und
einem elektrischen Energiespeichermodul (3), welches mit dem Gleichspannungsausganganschluss (10c) des Stromrichtermoduls (10) gekoppelt ist;

3. Photovoltaikanlage (100) nach Anspruch 2, weiterhin mit:
mindestens einem Wechselstromverbraucher (5), welcher mit dem Wechselspannungsausgangsanschluss (10b) des Stromrichtermoduls (10) gekoppelt ist.

4. Photovoltaikanlage (100) nach einem der Ansprüche 2 und 3, wobei die Photovoltaikmodule (1) dazu ausgelegt sind, einen dreiphasigen Strom in das Stromrichtermodul (10) einzuspeisen.

5. Photovoltaikanlage (100) nach einem der Ansprüche 2 und 3, wobei das Stromrichtermodul (10) dazu ausgelegt ist, einen dreiphasigen Strom an dem Wechselspannungsausgangsanschluss (10b) des Stromrichtermoduls (10) bereitzustellen.

6. Verfahren (20) zum Betreiben einer Photovoltaikanlage (100), mit den Schritten:
Einspeisen (21) eines Gleichstroms aus einem oder mehreren Photovoltaikmodulen (1) in den Zwischenkreis (12) eines Stromrichtermoduls (10);
Einspeisen (22) der Gleichspannung des Zwischenkreises (12) des Stromrichtermoduls (10) in einen mit dem Zwischenkreis (12) des Stromrichtermoduls (10) gekoppelten Wechselrichter (13) des Stromrichtermoduls (10) und einen mit dem Zwischenkreis (12) gekoppelten Gleichspannungswandler (14); und
Regeln (23) der Eingangsspannung des Wechselrichters (13) und des Gleichspannungswandlers (14) auf eine maximale Leistungsentnahme aus den Photovoltaikmodulen (1);
**dadurch gekennzeichnet, dass**
das Einspeisen (21) des Gleichstroms aus einem oder mehreren Photovoltaikmodulen (1) in den Zwischenkreis (12) eines Stromrichtermoduls (10) direkt erfolgt;
das Regeln des Wechselrichters (13) und des Gleichspannungswandlers (14) des Stromrichtermoduls (10) ein Maximum Power Point Tracking, MPPT, umfasst; und die Regeldynamik des MPPT des Gleichspannungswandlers (14) größer als die Regeldynamik des MPPT des Wechselrichters (13) ist.

7. Verfahren (20) nach Anspruch 6, wobei das MPPT ein Regeln der Eingangsspannung des Wechselrichters (13) und ein Festlegen der Leistungsaufnahme des Gleichspannungswandlers (14) in Abhängigkeit von der geregelten Eingangsspannung des Wechselrichters (13) aufweist.

## Claims

1. Power converter module (10), comprising:
a DC input terminal (10a) configured to receive an input voltage from a DC source (1);
an intermediate circuit (12) coupled to the DC input terminal (10a);
a DC output terminal (10c) configured to provide an output direct voltage;
an AC output terminal (10b) configured to provide an output alternating voltage;
a DC converter (14) coupled between the intermediate circuit (12) and the DC output terminal (10c) in order to draw an input voltage from the intermediate circuit (12);
an inverter (13) coupled between the intermediate circuit (12) and the AC output terminal (10b) in order to draw an input voltage from the intermediate circuit (12); and
a controller (15) coupled to the DC converter (14) and to the inverter (13), wherein the controller (15) is configured to control the input voltage of the inverter (13) and the input voltage of the DC converter (14) to a maximum power drain from the DC source (1),
**characterized in that**
the intermediate circuit (12) is coupled directly to the DC input terminal (10a); the controller (15) has a first maximum power point regulator (15a) allocated to the inverter (13) and controlling the input voltage of the inverter (13), and
the controller (15) has a second maximum power point regulator (15b) allocated to the DC converter (14) and controlling the input voltage of the DC converter (14); and
the control dynamic of the second maximum power point regulator (15b) is greater than the control dynamic of the first maximum power point tracking (15a).

2. Photovoltaic system (100), comprising:
one or several photovoltaic modules (1) comprising at least one solar cell (2);
a power converter module (10) according to claim 1 with a DC input terminal (10a) being coupled to an output terminal of the photovoltaic modules (1); and
an electrical energy storage module (3) coupled to the DC input terminal (10c) of the power converter module (10).

3. Photovoltaic system (100) according to claim 2, further comprising:
at least one AC consumer (5) coupled to the AC output terminal (10b) of the power converter module (10).

4. The photovoltaic system (100) according to one of the claims 2 and 3, wherein the photovoltaic modules (1) are configured to feed a three-phase current into the power converter module (100).

5. The photovoltaic system (100) according to one of the claims 2 and 3, wherein the power converter module (10) is configured to provide a three-phase current to the AC output terminal (10b) of the power converter module (10).

6. Method (20) for operating a photovoltaic system (100), comprising the steps:
feeding (21) a direct current from one or several photovoltaic modules (1) into an intermediate circuit (12) of a power converter module (10);
feeding (22) the direct voltage of the intermediate circuit (12) of the power converter module (10) into an inverter (13) of the power converter module (10), the inverter (13) being coupled to the intermediate circuit (12) of the power converter module (10), and into a DC converter (14) of the power converter module (10), the DC converter (14) being coupled to the intermediate circuit (12); and
controlling (23) the input voltage of the inverter (13) and the input voltage of the DC converter (14) to a maximum power output from the photovoltaic modules (1);
**characterized in that**
the feeding (21) the direct current from the at least one photovoltaic module (1) into the intermediate circuit (12) of the power converter module (10) takes places directly;
the control of the inverter (13) and the DC converter (14) of the power converter module (10) includes a maximum power point tracking; and
the control dynamic of the maximum power point tracking of the DC converter (14) is greater than the control dynamic of the maximum power point tracking of the inverter (13).

7. Method according to claim 6, wherein the maximum power point tracking includes a control of the input voltage of the inverter (13) and a determination of the power input of the DC converter (14) dependending on the controlled input voltage of the inverter (13).

## Revendications

1. Module convertisseur de courant (10), comprenant :
une borne d'entrée de tension continue (10a) qui est conçue pour recevoir une tension d'entrée d'une source de tension continue (1) ;
un circuit intermédiaire (12) qui est connecté à la borne d'entrée de tension continue (10a) ;
une borne de sortie de tension continue (10c) qui est conçue pour fournir une tension continue de sortie ;
une borne de sortie de tension alternative (10b) qui est conçue pour fournir une tension alternative de sortie ;
un convertisseur de tension continue (14) qui est connecté entre le circuit intermédiaire (12) et la borne de sortie de tension continue (10c) pour prélever une tension d'entrée du circuit intermédiaire (12) ;
un onduleur (13) qui est connecté entre le circuit intermédiaire (12) et la borne de sortie de tension alternative (10b) pour prélever une tension d'entrée du circuit intermédiaire (12) ; et
un dispositif de régulation (15) qui est connecté au convertisseur de tension continue (14) et à l'onduleur (13) et qui est conçu pour réguler la tension d'entrée de l'onduleur (13) et du convertisseur de tension continue (14) à un prélèvement de puissance maximal de la source de tension continue (1),
**caractérisé en ce que**
le circuit intermédiaire (12) est connecté directement à la borne d'entrée de tension continue (10a) ;
le dispositif de régulation (15) possède un premier régulateur MPP (15a) associé à l'onduleur (13) et régulant la tension d'entrée de l'onduleur (13) ;
le dispositif de régulation (15) possède un deuxième régulateur à point de puissance maximale, MPP, (15b) associé au convertisseur de tension continue (14) et régulant la tension d'entrée du convertisseur de tension continue (14) ; et
la dynamique de régulation du deuxième régulateur MPP (15b) est supérieure à la dynamique de régulation du premier régulateur MPP (15a).

2. Installation photovoltaïque (100), comprenant :
un ou plusieurs modules photovoltaïques (1) dotés d'au moins une cellule solaire (2) ;
un module convertisseur de courant (10) selon la revendication 1, dont la borne d'entrée de tension continue (10a) est connectée à une borne de sortie des modules photovoltaïques (1) ; et
un module accumulateur d'énergie électrique (3) qui est connecté à la borne de sortie de tension continue (10c) du module convertisseur de courant (10).

3. Installation photovoltaïque (100) selon la revendication 2, comprenant en outre : au moins un consommateur de courant alternatif (5) qui est connecté à la borne de sortie de tension alternative (10b) du module convertisseur de courant (10).

4. Installation photovoltaïque (100) selon l'une des revendications 2 et 3, les modules photovoltaïques (1) étant conçus pour injecter un courant triphasé dans le module convertisseur de courant (10).

5. Installation photovoltaïque (100) selon l'une des revendications 2 et 3, le module convertisseur de courant (10) étant conçu pour fournir un courant triphasé sur la borne de sortie de tension alternative (10b) du module convertisseur de courant (10).

6. Procédé (20) pour faire fonctionner une installation photovoltaïque (100), comprenant les étapes suivantes :
injection (21) d'un courant continu en provenance d'un ou plusieurs modules photovoltaïques (1) dans le circuit intermédiaire (12) d'un module convertisseur de courant (10) ;
injection (22) de la tension continue du circuit intermédiaire (12) du module convertisseur de courant (10) dans un onduleur (13) du module convertisseur de courant (10), connecté au circuit intermédiaire (12) du module convertisseur de courant (10), et dans un convertisseur de tension continue (14) connecté au circuit intermédiaire (12) ; et
régulation de la tension d'entrée de l'onduleur (13) et du convertisseur de tension continue (14) à un prélèvement de puissance maximal des modules photovoltaïques (1),
**caractérisé en ce que**
l'injection (21) du courant continu s'effectue directement dans le circuit intermédiaire (12) d'un convertisseur de courant (10) depuis un ou plusieurs modules photovoltaïques (1) ;
la régulation de l'onduleur (13) et du convertisseur de tension continue (14) du convertisseur de courant (10) comprend un suivi de point de puissance maximal, MPPT ; et
la dynamique de régulation du MPPT du convertisseur de tension continue (14) est supérieure à la dynamique de régulation du MPPT de l'onduleur (13).

7. Procédé (20) selon la revendication 6, le MPPT présentant une régulation de la tension d'entrée de l'onduleur (13) et une définition de la puissance consommée du convertisseur de tension continue (14) en fonction de la tension d'entrée régulée de l'onduleur (13) .
